# EUROPEAN PATENT APPLICATION

(11) **EP 1 426 919 A1**
(43) Date of publication of application: **09.06.2004**
(21) Application number: 02026877.7
(22) Date of filing: 02.12.2002
(51) Int. Cl.: G09G 5/00

(54) **Method for operating a display device**

(71) Applicant: Sony International (Europe) GmbH, 10785 Berlin (DE)
(72) Inventor: Michelitsch, Georg, Sony Intern.(Europe) GmbH, 70327 Stuttgart (DE); Möhler, Gregor, Sony Intern.(Europe) GmbH, 70327 Stuttgart (DE); Rapp, Stefan, Sony Intern.(Europe) GmbH, 70327 Stuttgart (DE)
(74) Representative: Müller - Hoffmann & Partner

(57) **Abstract**

A method for operating a display device (DD) is proposed. In the proposed method a convenient and reliable perception of displayed display information (DI) is enabled by displaying (S3) display information (DI) using a selected or changed display mode for a display unit (DU) or changed display information (DI), which are selected (S2) in accordance to user position information (UPI) of a possible user (U) with respect to a display unit (DU) of the display device (DD).

## Description

The present invention relates to a method for operating a display device. In particular, the present invention relates to a method for operating a display device wherein the graphical output is varied with respect to its content in dependence of the position or distance of a possible user.

Nowadays, a large variety of electronic equipment involves graphical user interfaces to enable a possible user a particular convenient and reliable interaction with the electronic equipment. Therefore, a display device is provided on which e.g. information regarding the different operation modes and statuses can be displayed to inform a possible user with respect to the functional capabilities of the respective electronic equipment.

Known display devices display their display information in a constant manner, whereas the user of such an equipment often tends to move around and to change his position and/or orientation with respect to the display device and in particular with respect to the respective display unit of the display device.

Under these varying positions and orientations it is not always possible and convenient for the user to percept the displayed information and its details. Therefore, it is necessary for the user to be positioned in a certain range and certain distance with respect to the electronic equipment, thereby reducing the flexibility and convenience for the user.

It is an object of the present invention to provide a method for operating a display device which enables a particular convenient and reliable perception of displayed information by a user in particular independently from the user's position and/or orientation with respect to the display unit of the display device.

The object is achieved by a method for operating a display device according to the characterizing features of independent claim 1. Additionally, the object is achieved by a method for operating the man-machine interface unit, by an apparatus, by a computer program product and by a computer readable storage medium according to the characterizing features of independent claims 9, 10, 11, and 12, respectively. Preferred embodiments of the method for operating a display device are within the scope of the dependent sub-claims.

The method for operating a display device according to the present invention, in particular within a graphical user interface unit, comprises the steps of generating and/or receiving user position information of a possible user in relation to an involved display unit of said display device, selecting and/or changing a display mode for displaying display information on said display unit and/or said display information itself, taking into account said user position information, displaying said display information or a derivative thereof on said display unit using said selected and/or changed display mode for said display unit and/or said selected and/or changed display information or a derivative thereof, thereby enabling a particular convenient and/or reliable perception of said displayed display information by said possible user in relation to the position of the user with respect to said display unit.

It is, therefore, a basic aspect of the present invention to change and/or select a display mode or the information to be displayed, namely the display information, in dependence of generated and/or received user position information. Therefore, the position of the user with respect to the display unit is checked. It is decided in which display mode the display information and/or what display information has to be or can be displayed on said display unit. Therefore, the process of displaying the display information can be adapted in accordance with the respective position of the user compared to the position of the display unit and in accordance to its variation. Therefore, in contrast to known display devices and methods for operating the same, the perception of displayed information by a possible user can be enhanced and improved.

In the sense of the invention the term "position" shall mean spatial localization, spatial orientation and/or spatial distance.

Therefore, according to a preferred embodiment of the method for operating a display device said user position information is designed to describe one or an arbitrary plurality or combination of the following aspects: a distance of the user and in particular the user's eyes with respect to said display unit, a first orientation as an orientation of the users of the user's eyes location with respect to said display unit, in particular describing a view angle of the user with respect to said display unit, a second orientation or a torsional orientation between the view axis of the user or the user's eyes and the display axis of said display unit.

Further preferably, the step of generating and/or receiving said user position information involves a process of measuring the distance between the possible user or the possible user's eyes and the display unit.

Additionally or alternatively, a distance or position sensing means is used for measuring the distance between a possible user or the possible user's eyes and the display unit.

In this case, an ultrasonic sensor means, an infrared sensor means, a camera device and/or the like may be involved. Additionally, any combination or plurality of these measures can be taken to realize said position sensing means. In the case of using a camera device an image processing means and/or an image/face recognition process can be adopted so as to obtain the position information from the user's face, for instance, the eyes of the user, e.g. from the orientation of a connection line between the user's eyes.

According to a further alternative of the present invention by selecting and/or changing said display mode and/or said display information itself one or any arbitrary combination or plurality of the following aspects may be realized:
- the size of the image and/or of parts thereof are adapted,
- the resolution of the image and/or of parts thereof are adapted,
- the representation of details of the image and/or of parts thereof is adapted, in particular with respect to the amount, the size, the color,
- the view angle of the user is compensated,
- the torsional orientation between the view axis of the user and the display axis of the display unit is compensated,
- the semantic contents of the image and/or of parts thereof are adapted.

Further additionally or alternatively, with increasing distance between a possible user and the display unit one or any combination or plurality of the following aspects may be realized:
- with respect to text information the font size and/or the line width are increased, in particular in a continuous manner,
- with respect to text information the amount of text is reduced and/or only respective comparable most important information contents are chosen for the step of displaying, in particular by performing a process of re-phrasing,
- with respect to image information the amount of details to be displayed is reduced, in particular in a continuous manner.

According to a further preferred embodiment it is provided that with decreasing distance between a possible user and the display unit one or any arbitrary combination or plurality of the following aspects may be realized:
- with respect to text information the font size and/or the line width are decreased, in particular in a continuous manner,
- with respect to text information the amount of text is increased and/or respective comparable less important information contents are chosen for the step of displaying, in particular by performing a process of re-phrasing,
- with respect to image information the amount of details to be displayed is increased, in particular in a continuous manner.

According to a further aspect of the present invention a method for operating a man-machine interface unit and in particular for operating a graphical user interface unit is provided, which comprises the inventive method for operating a display device.

An additional aspect of the present invention is to provide an apparatus, in particular a graphical user interface unit or a man-machine interface unit, which is adapted to realize the inventive method for operating a display device and/or to realize a method for operating a man-machine interface unit.

According to a further aspect of the present invention a computer program product is provided comprising computer program means being adapted to realize the inventive method for operating a display device and/or for realizing the inventive method for operating a man-machine interface unit when it is executed on a computer, a digital signal processing means and/or the like.

Furtheron, according to the present invention a computer readable storage medium is provided which comprises the inventive computer program product.

These and further aspects of the present invention are further elucidated based on the following remarks:

This invention inter alia relates to a graphical user interface and to a method for operating the same where the size, color, and/or semantic content of the displayed information can be adjusted based on the position, distance and/or orientation of the user with respect to a display unit and in particular to a screen.

### Motivation

In contrast to typical office applications, where the user sits in front of his PC, interaction with non-office information processing devices using embedded displays is not necessarily performed from a fixed distance. Consider everyday devices such as air conditioners, telephone answering machines and so on, where the user tends to glance at the display to get a quick feedback on the state of the machine from different positions relative to the device. It would be highly desirable for the user to be able to read the most important information provided by such a device while passing it at a distance, yet be able to see more details while interacting with it at a close distance.

### Concepts

The basic idea behind the notion of distance aware user interfaces is the reliance on a sensor device to measure the distance of the user from the screen. Instead of consciously changing the visualization through traditional user interaction widgets such as sliders, the user changes the visualization of the content based on his body movement. Similar to the way humans perceive features in nature that are located at different distances from the person through familiar effects such as perspective changes in size, subdued colors observed on distance objects, and the reduction of information to a more outline based form for distance objects, the proposed user interface relies on similar techniques to adapt its content to the users viewing position.

SIZE : The size of visual artifacts on screen, such as the font size of text or the line width for graphics, are increased as the viewing distance of the person increases. The transformation is performed continuously in order to achieve a smooth transition from one size to the next. Features of the visualization that cannot be recognized anymore by the user due to the large viewing distance are dropped or changed into another visual representation that can still fit the size of the screen.

COLOR : Features of the visualization that are put into the foreground due to viewing distance and/or selection by the user are rendered with more saturated colors. Other features in the background are shown with less saturated colors. This effect re-enforces the illusion of distance and helps the user to focus on the important aspect of the visualization.

INFORMATION REDUCTION : Textual output can be reduced in size by re-phrasing a given content in more or less verbose forms. This involves the creation of text from a semantic representation kept by the system that reflects the meaning of the content to be conveyed to the user. The result of this reduction of verbosity can be compared to the techniques used by the print media, which uses titles, short abstracts, and full text to present a given content at different levels of detail.

### Implementation

Two implementations of distance sensing have been successfully tried. The first uses video picture analysis, the second uses a special infrared sensor. Both methods are known in the literature or are incorporated into existing products. Besides the two mentioned methods that are further detailed below, further known methods of measuring distance are possible, e.g. measuring the time that an ultrasonic sound wave takes when being reflected at the user, e.g. used in parking aids, electronic yardstick), RF tag distance, laser interferometry.

VIDEO ANALYSIS : The distance between the left and right eye is roughly constant at about 60 mm for all humans, children having a somewhat smaller distance. By detecting the face in a video picture shot by a camera mounted on top of the display, it can be inferred how far away the eye pair is from the camera by the distance of the detected eye balls in the picture through elementary geometric calculations. Video tracking of faces and eyes is obviously known, it is unclear whether the use of eye ball distance for distance estimation is known or not.

INFRARED SENSOR : IR or infrared sensors can be used as long distance measuring sensors.

### Potential Applications

Applications of the above described distance aware graphical user interface range from devices at home, personal portable devices, to public kiosk like setups. In particular the following applications scenarios can be considered:
**1.** Information display on a TV set such as for electronic program guides or EPG.
**2.** Intelligent home appliances with embedded displays such as air conditioners, weather stations, home security systems etc.
**3**. Telephone answering machines.
4. Portable devices such as PDAs and mobile phone that are visually monitored from a distance, e.g. when put on the desk top.
5. Information kiosks at public places such as at train stations, airports, and museums.

In the following, the invention will be described in more detail taking reference to the accompanying figures on the basis of preferred embodiments of the invention.
- **Fig. 1**: is a flowchart describing a first embodiment of the inventive method for operating a display device.
- **Fig. 2A, B**: demonstrate the dependence of the displayed information on the viewing distance of a user which can be involved in an embodiment of the inventive method for operating a display device.
- **Fig. 3**: is a schematical block diagram describing a further embodiment of the inventive method for operating a display device.
- **Fig. 4A, B**: elucidates a process for detecting a distance of an object with respect to a display unit by a triangulation method.

In the following, same elements and functions are indicated by the same reference symbols, and their detailed description is not repeated for each occurrence thereof.

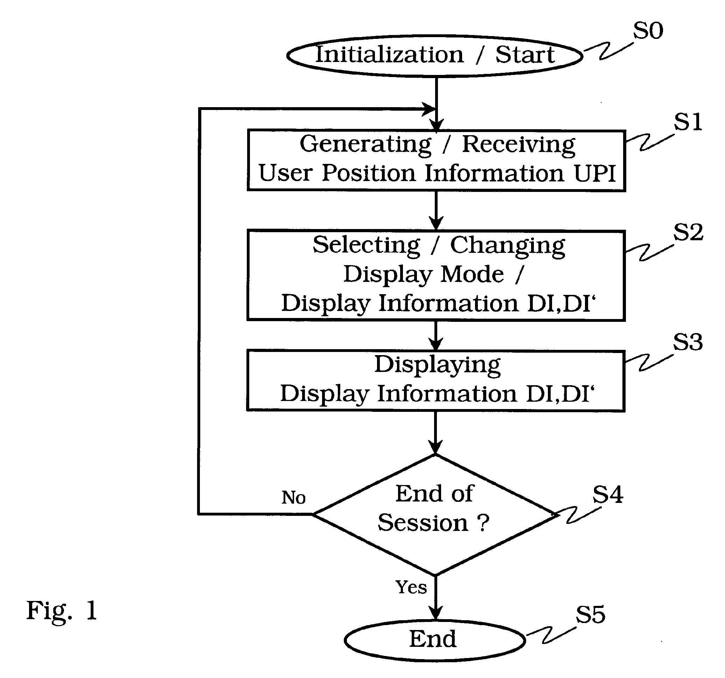

Fig. 1 is a flowchart of a first embodiment of the inventive method for operating a display device DD. In a preliminary step S0 of the embodiment shown in Fig. 1 the process is initialized and started. Then, in a first step S1 the user position information UPI is generated and/or received. The receipt of the user position information UPI may be realized by connecting to an external measuring device. Alternatively, the user position information UPI may also be generated by the method itself by performing a measuring process within step S1.

In the following step S2 the display mode for the display unit DU is selected and/or changed. Also, in step S2 the display information DI may be selected and/or changed so as to derive a derivative DI' of the display information DI. In the following step S3 said display information DI, DI' is displayed on a display unit DU. Then, in the following step S4 it is checked, whether the processing session is ended or not. If the end is not reached then the process continues and refers back to the first step S 1 of the method shown in Fig. 1.

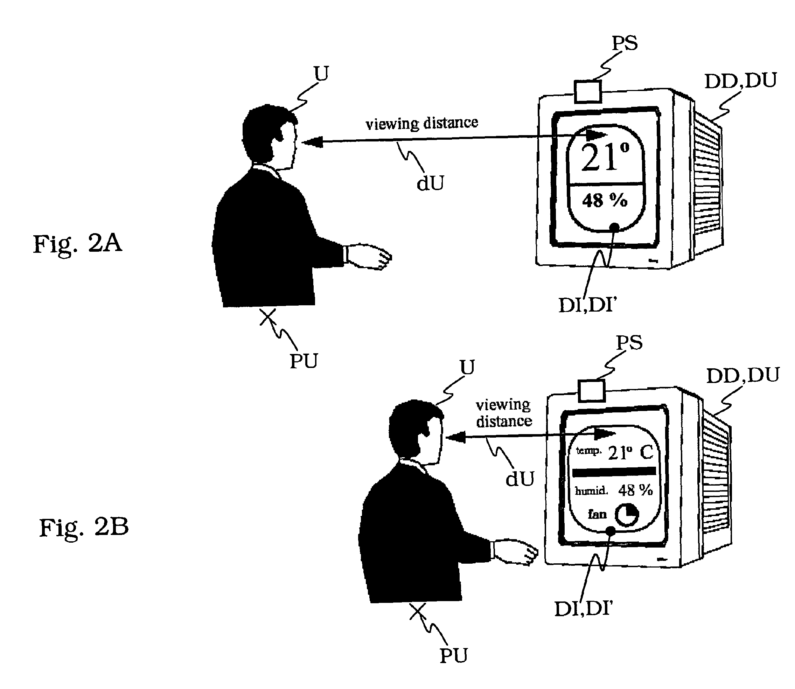

In Figs. 2A and 2B the dependence of the displayed display information DI upon the viewing distance or the distance dU of the possible user U is explained. In Fig. 2B the possible user is situated in a comparable small distance dU with respect to the display device DD of the display unit DU of the display device DD. Therefore, the full informational content of the display information DI is displayed, showing the temperature, the humidity and the action of a fan device.

In contrast, in Fig. 2A the possible user U is situated in a comparable large distance dU with the respect to the display device DD or the display unit DU of the display device DD. Therefore, in the situation of Fig. 2A only a derivative DI' of the display information DI of Fig. 2B is displayed on the display unit DU, now containing only a reduced informational content, namely the temperature and the humidity only, and in a representation increased in size to be better readable in the distance dU of the use U.

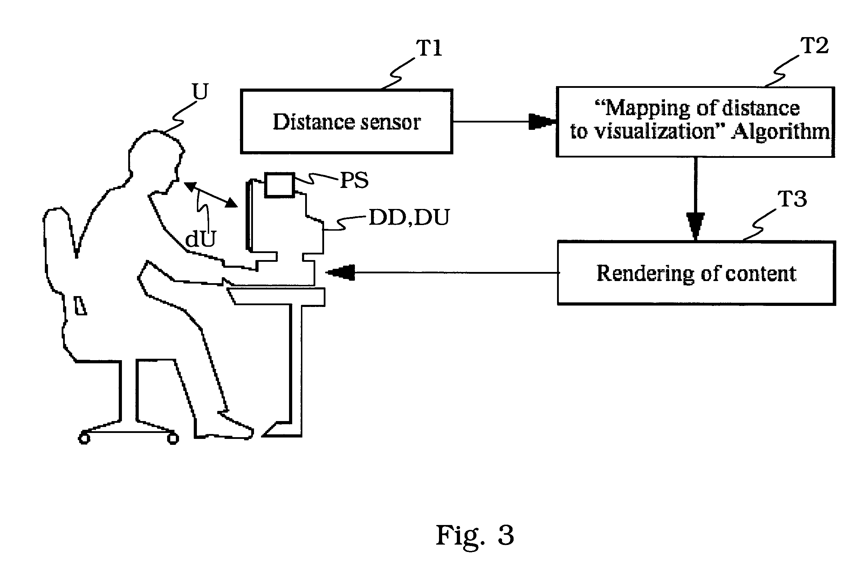

Fig. 3 demonstrates a more concrete embodiment of the present invention. Here, a possible user U is situated at a distance dU with respect to a display device DD comprising a display unit DU in the form of a personal computer. To obtain the distance dU between the possible user U and the display unit DU said display device DD comprises a position sensing means PS which can be referred to as a distance sensor PS. Based on a distance measurement with respect to the distance dU performed in a step T1 in Fig. 3 by said distance sensor PS in a following step T2 said distance value dU is further processed and set into a visualization algorithm, upon the action of which the content and the representation of the display information DI is rendered within a further step T3 in Fig. 3. Finally, the process of displaying said display information DI is adapted.

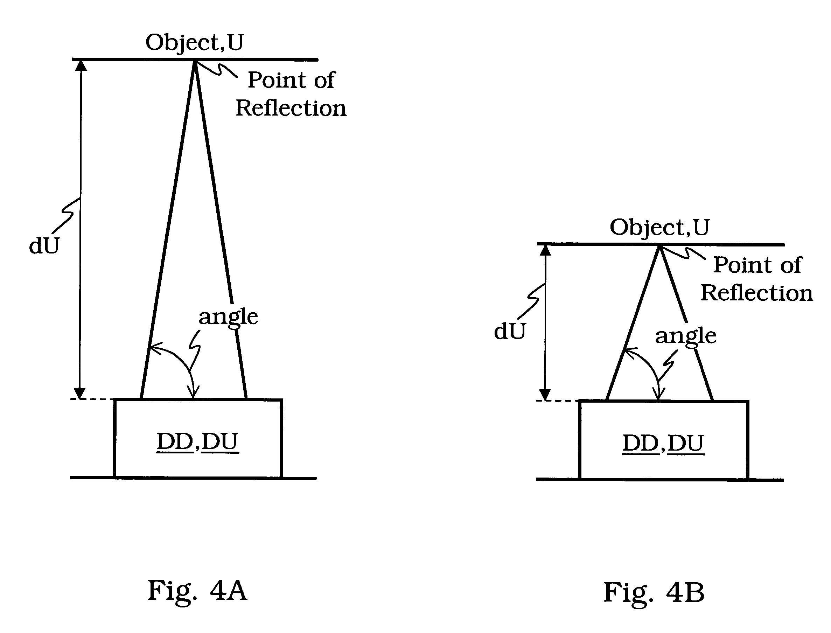

In Figs. 4A and 4B a possible measuring process as indicated by the steps S1 of Fig. 1 and T1 of Fig. 3 is explained in more detail. In Fig. 4A an object, namely a possible user U is situated comparable far at a comparable large distance dU before the display device DD having the display unit DU. In contrast, in the situation shown in Fig. 4B the object, namely the user U is situated comparable close at a comparable low distance dU before said display device DD and said display unit DU. In each case, a beam of light is emitted from the display unit DU and the angle of incidence with respect to a given point of reflection onto the object or user U is measured based on which angle the distances dU can be calculated.

### List of Reference Symbols

- **DD**: display device
- **DI**: display information
- **DI'**: derivative of display information, changed display information, selected display information
- **DU**: display unit
- **dU**: distance of an object/possible user
- **GUI**: graphical user interface
- **PS**: position sensing means, distance sensor
- **PU**: location of a possible user/of the eyes of a possible user
- **U**: user/possible user

## Claims

1. Method for operating a display device,
in particular within a graphical user interface (GUI),
comprising the steps of:
- generating and/or receiving (S1) user position information (UPI) of a possible user (U) in relation to an involved display unit (DU) of said display device (DD),
- selecting and/or changing (S2) a display mode for displaying display information (DI) on said display unit (DU) and/or said display information (DI) itself, taking into account said user position information (UPI),
- displaying (S3) said display information (DI) or a derivative (DI') thereof on said display unit (DI) using said selected and/or changed display mode for said display unit (DU) and/or said selected and/or changed display information (DI) or the derivative (DI') thereof,
- thereby enabling a particular convenient and/or reliable perception of displayed display information (DI, DI') by said possible user (U) in relation to the position (PU) of the user (U) with respect to the display unit (DU).

2. Method according to claim 1,
wherein said user position information (UPI) is designed to describe one or an arbitrary plurality or combination of the following aspects:
- a distance (dU) of the possible user (U) and in particular of the user's eyes with respect to said display unit (DU),
- a first orientation as an orientation of the user's or of the user's eyes location (PU) with respect to said display unit (DU), in particular describing a view angle of the user (U) with respect to said display unit (DU),
- a second orientation or a torsional orientation between the view axis of the user (U) or the user's eyes and the display axis of said display unit (DU).

3. Method according to any one of the preceding claims,
wherein the step of generating and/or receiving (S1) said user position information (UPI) involves a process of measuring the distance (dU) between the possible user (U) or the user's eyes and said display unit (DU).

4. Method according to any one of the preceding claims,
wherein a distance or a position sensing means (PS) is used for measuring the distance (dU) between the possible user (U) or the user's eyes and the display unit (DU).

5. Method according to claim 4,
wherein an ultrasonic sensor means, an infrared sensor means, a camera device ― in particular together with an image processing means and/or an image/face recognition process ― or any combination or plurality thereof are used as said position sensing means (PS).

6. Method according to any one of the preceding claims,
wherein by selecting and/or changing (S2) said display mode and/or said display information (DI) itself one or any combination or plurality of the following aspects is realized:
- the size of the image and/or of parts thereof are adapted,
- the resolution of the image and/or of parts thereof are adapted,
- the representation of details of the image and/or of parts thereof is adapted, in particular with respect to the amount, the size, the color,
- the view angle of the user (U) is compensated,
- the torsional orientation between the view axis of the user (U) and the display axis of the display unit (DU) is compensated,
- the semantic contents of the image and/or of parts thereof are adapted.

7. Method according to any one of the preceding claims,
wherein with increasing distance (dU) between a possible user (U) and the display unit (DU) one or any combination or plurality of the following aspects is realized:
- with respect to text information the font size and/or the line width are increased, in particular in a continuous manner,
- with respect to text information the amount of text is reduced and/or only respective comparable most important information contents are chosen for the step of displaying (S3), in particular by performing a process of re-phrasing,
- with respect to image information the amount of details to be displayed is reduced, in particular in a continuous manner.

8. Method to any one of the preceding claims,
wherein with decreasing distance (dU) between a possible user (U) and the display unit (DU) one or any combination or plurality of the following aspects is realized:
- with respect to text information the font size and/or the line width are decreased, in particular in a continuous manner,
- with respect to text information the amount of text is increased and/or also respective comparable less important information contents are chosen for the step of displaying (S3), in particular by performing a process of re-phrasing,
- with respect to image information the amount of details to be displayed is increased, in particular in a continuous manner.

9. Method for operating a man-machine interface unit and in particular a graphical user interface unit (GUI),
which comprises a method for operating a display device (DD) according to any one of the claims 1 to 8.

10. Apparatus, in particular graphical user interface unit or man-machine interface unit,
which is adapted to realize a method for operating a display device (DD) according to any one of the claims 1 to 8 or a method for operating a man-machine interface unit according to claim 9.

11. Computer program product comprising computer program means being adapted to realize a method for operating a display device according to any one of the preceding claims 1 to 8 or a method for operating a man-machine interface unit according to claim 9 when it is executed on a computer, a digital signal processing means and/or the like.

12. Computer readable storage medium comprising a computer program product according to claim 11.
